# EUROPÄISCHE PATENTSCHRIFT

(11) **EP 4 530 462 B1**
(45) Veröffentlichungstag und Bekanntmachung des Hinweises auf die Patenterteilung: **05.08.2026**
(21) Anmeldenummer: 24199366.6
(22) Anmeldetag: 10.09.2024
(51) Int. Cl.: F03C 1/00, F16D 55/38, F16D 55/24, B60T 1/06, F04B 1/1071, F04B 1/0404, F01B 13/06, F03C 1/24, F03C 1/047, F16D 55/36, F16D 55/40, F16D 65/18

(54) **RADIALKOLBENMASCHINE MIT MEHRSCHEIBENBREMSE**
RADIAL PISTON MACHINE WITH MULTIPLE DISC BRAKE
MACHINE À PISTONS RADIAUX AVEC FREIN MULTI-DISQUE

(30) Priorität: 27.09.2023 DE 102023209471
(43) Veröffentlichungstag der Anmeldung: 02.04.2025
(73) Patentinhaber: Robert Bosch GmbH, 70442 Stuttgart (DE)
(72) Erfinder: Rompogiannakis, Evangelos, Glasgow, G32 9XA (GB)

(56) Entgegenhaltungen:
- EP-A2- 2 841 763
- EP-B1- 1 053 147
- DE-A1- 10 035 196
- US-B2- 9 551 222

## Beschreibung

Die Erfindung betrifft eine Radialkolbenmaschine gemäß dem Oberbegriff von Anspruch 1.

Aus der EP 2 841 763 B1 ist eine Radialkolbenmaschine mit einer Mehrscheibenbremse bekannt. Die entsprechend Bauweise der Radialkolbenmaschine zeichnet sich dadurch aus, dass sie in Richtung der Drehachse sehr wenig Bauraum benötigt. Dies wird in erster Linie dadurch erreicht, dass das Bremsscheibenpaket der Mehrscheibenbremse um das wenigstens eine Drehlager der Antriebswelle herum angeordnet ist. Die Antriebswelle umfasst dafür einen ersten Ringabschnitt, welcher über einen Scheibenabschnitt mit einem Wellenabschnitt einstückig verbunden ist. Eine Hälfte der Bremsscheiben ist mit dem ersten Ringabschnitt drehfest verbunden, wobei eine andere Hälfte der Bremsscheiben mit einem zweiten Ringabschnitt drehfest verbunden ist, welcher Bestand eines Gehäuses der Radialkolbenmaschine ist. Die Mehrscheibenbremse ist mit einer Tellerfeder in den geschlossenen Zustand vorgespannt. Durch Druckbeaufschlagung eines Bremsraums, der von einem ringförmigen Bremskolben begrenzt wird, kann die Mehrscheibenbremse in einen offenen Zustand umgeschaltet werden.

Ein Vorteil der vorliegenden Erfindung besteht darin, dass die Radialkolbenmaschine noch weniger Bauraum in Richtung der Drehachse benötigt. Darüber hinaus ist sie deutlich kostengünstiger, weil sie weniger Bauteile umfasst, wobei insbesondere auf sehr teure Bauteile verzichtet werden kann. Hier ist insbesondere die teure Gleitringdichtung (Duo Cone Seal) der EP 2 841 763 B1 zu nennen, mit welcher der Spalt zwischen dem ersten Ringabschnitt und dem Gehäuse dicht verschlossen wird. Weiter kann auf einen gesonderten Ölvorrat zur Schmierung der Bremsscheiben verzichtet werden.

Gemäß Anspruch 1 wird vorgeschlagen, dass das Bremsscheibenpaket innerhalb des Bremsraumes angeordnet ist, wobei der erste und der zweite Ringabschnitt den Bremsraum jeweils abschnittsweise begrenzen, wobei der Scheibenabschnitt, die Feder, der Bremskolben und das Bremsscheibenpaket in der angegeben Reihenfolge entlang der Drehachse so nebeneinander angeordnet sind, dass eine Kraft der Feder auf das Bremsscheibenpaket übertragbar ist.

Die Radialkolbenmaschine wird vorzugsweise mit einem Druckfluid betrieben, bei dem es sich höchst vorzugsweise um eine Flüssigkeit und insbesondere um Hydrauliköl handelt. Die Radialkolbenmaschine wird vorzugsweise als Motor betrieben, wobei sie auch als Pumpe betreibbar ist, wobei Mischformen ebenfalls denkbar sind.

Es ist denkbar, dass die Radialkolbenmaschine eine Ventilvorrichtung umfasst, mittels derer zwischen mehreren effektiven Verdrängungsvolumina umgeschaltet werden kann, indem einzelne oder alle Arbeitsräume kurzgeschlossen werden. Dabei ist es denkbar, dass ein Freilaufbetrieb realisiert wird, bei dem alle Arbeitsräume kurzgeschlossen ist, so dass sich der Rotor frei drehen kann, ohne dass es zu einem Fluidstrom zwischen dem ersten und dem zweiten Arbeitsanschluss kommt. In allen übrigen Stellungen der Ventilvorrichtung geht eine Drehung des Rotors vorzugsweise mit einem Fluidstrom zwischen dem ersten und dem zweiten Arbeitsanschluss einher. Die Feder ist vorzugsweise als Tellerfeder ausgebildet. Der Wellenabschnitt, der Scheibenabschnitt und der erste Ringabschnitt der Antriebswelle sind vorzugsweise einstückig miteinander verbunden.

Der Bremskolben ist vorzugsweise in Richtung der Drehachse beweglich relativ zur Antriebswelle. Der entsprechend Bewegungsweg ist vorzugsweise so groß ausgelegt, dass die Mehrscheibenbremse zwischen dem geschlossenen und dem offenen Zustand umschaltbar ist. Der Fluidverteiler und das wenigstens eine Drehlager sind in Richtung der Drehachse vorzugsweise auf gegenüberliegenden Seiten des Rotors angeordnet.

Vorzugsweise ist zumindest ein Drehlager radial zur Drehachse zwischen dem Wellenabschnitt und dem zweiten Ringabschnitt angeordnet ist. Höchst vorzugsweise sind ein erstes und ein zweites Drehlager vorgesehen, welche radial zur Drehachse zwischen dem Wellenabschnitt und dem zweiten Ringabschnitt angeordnet sind.

In den abhängigen Ansprüchen sind vorteilhafte Weiterbildungen und Verbesserungen der Erfindung angegeben.

Es kann vorgesehen sein, dass der Bremskolben mit einer radial äußeren Umfangsfläche dichtend am ersten Ringabschnitt anliegt, wobei er mit einer radial inneren Umfangsfläche dichtend am Wellenabschnitt anliegt, so dass die Antriebswelle und der Bremskolben einen Federraum umgrenzen, in welchem die Feder angeordnet ist. Damit findet keine Relativdrehung zwischen Bremskolben und Antriebswelle statt, so dass die Abdichtung des Bremskolbens unproblematisch möglich ist, wobei insbesondere das aus der EP 2 841 763 B1 bekannt Dichtungskonzept des Bremskolbens übernommen werden kann.

Es kann ein erster Fluidkanal vorgesehen sein, welcher ausgehend vom Federraum bis zu einem Innenraum des Gehäuses vollständig innerhalb der Antriebswelle verläuft. Ohne den ersten Fluidkanal, der vom Federraum zum Innenraum es Gehäuses führt, wäre der Federraum nahezu dicht verschlossen. Unvermeidbare Leckagen zum Federraum hin könnten dazu führen, dass die erwünschte Bewegung des Bremskolbens behindert wird. Dies wird durch den ersten Fluidkanal zuverlässig vermieden. Das Gehäuse hat vorzugsweise einen Leckageanschluss, welcher in den genannten Innenraum einmündet, wobei an dem Leckageanschluss ein im Wesentlichen druckloser Tank angeschlossen werden kann, so dass der Innenraum ebenfalls im Wesentlichen drucklos ist, wobei im Innenraum anfallenden Leckagen zum Tank abfließen können.

Es kann ein gesonderter Verschlussring vorgesehen sein, der radial zur Drehachse zwischen dem ersten und dem zweiten Ringabschnitt angeordnet ist, wobei der Verschlussring den Bremsraum abschnittsweise begrenzt, wobei das Bremsscheibenpaket in Richtung der Drehachse zwischen dem Bremskoben und dem Verschlussring angeordnet ist, so dass eine Kraft der Feder am Verschlussring abstützbar ist, wobei der Verschlussring in Richtung der Drehachse am ersten Ringabschnitt abgestützt ist. Wenn die bevorzugte einstückige Antriebswelle verwendet wird, ist der Verschlussring hilfreich, um das Bremsscheibenpaket, den Bremskolben und die Feder in die Antriebswelle einzubauen. Grundsätzlich sind andere Aufteilungen der Baugruppe umfassend die Antriebswelle und den Verschlussring möglich. Die vorgeschlagene Aufteilung ergibt j edoch eine optimale Steifigkeit und Festigkeit der Radialkolbenmaschine.

Es kann vorgesehen sein, dass der Verschlussring mittels eines gesonderten Sicherungsrings am ersten Ringabschnitt in Richtung der Drehachse abgestützt ist, wobei die entsprechende Verbindung so ausgelegt ist, dass der Verschlussring außerdem bezüglich der Drehachse drehfest mit dem ersten Ringabschnitt verbunden ist. Der Sicherungsring benötigt wenig Bauraum, wobei er dennoch die im Betrieb auftretenden Kräfte sicher übertragen kann. Die genannte drehfeste Verbindung geschieht vorzugsweise mittels Reibschluss. Es versteht sich, dass das drehfest übertragbare Drehmoment hierbei nach oben begrenzt ist. Im Betrieb wirken vorzugsweise nur die Reibmomente der verschiedenen Dichtringe auf den Verschlussring ein, so dass das genannte übertragbare Drehmoment nicht überschritten wird.

Es kann vorgesehen sein, dass der Verschlussring radial außen drehfest mit dem ersten Ringabschnitt verbunden ist, wobei radial innen am Verschlussring wenigstens ein dynamischer Dichtring zwischen dem Verschlussring und dem zweiten Ringabschnitt angeordnet ist. Unter einer einem dynamischen Dichtring wird ein Dichtring verstanden, bei dem die im Dichtkontakt auftretende Relativbewegung nur einen geringen Verschleiß verursacht, der die gewünschte Dichtwirkung lange Zeit nur unwesentlich beeinträchtigt. Im Rahmen der vorliegenden Erfindung ist jedenfalls der dynamische erste und vierte Dichtring dem hohen Druck im Bremsraum ausgesetzt, was den genannten Verschleiß zusätzlich verstärkt. Bei der EP 2 841 763 B1 hat man diese ungünstige Kombination gerade vermieden.

Es kann vorgesehen sein, dass der wenigstens eine dynamische Dichtring einen ersten und einen zweiten Dichtring umfasst, die in Richtung der Drehachse nebeneinander angeordnet sind, so dass sich zwischen dem ersten und dem zweiten Dichtring ein Leckageraum ergibt, wobei der erste Dichtring den Bremsraum unmittelbar abdichtet, wobei er so ausgelegt ist, dass sich im Dichteingriff ein Leckagestrom ergeben kann, wenn der Bremsraum unter Druck steht, wobei der zweite Dichtring fluiddicht ausgelegt ist, wobei der Leckageraum über einen zweiten Fluidkanal mit dem Innenraum des Gehäuse verbunden ist. Der zweite Dichtring ist vorzugsweise als Radialwellendichtring ausgebildet. Er ist dementsprechend nicht besonders druckfest, wobei er aber trotz der Drehbewegung zwischen Gehäuse und Antriebswelle dauerhaft dicht ist. Der erste Dichtring ist vorzugsweise als Kompressions-Dichtring ausgelegt, dessen Dichtwirkung von der Druckdifferenz zwischen dem Bremsraum und dem Leckageraum aktiviert wird. Ein entsprechender erster Dichtring ist aus dem Technical Bulletin "Turcon Buffer Ring" (Edition No. EPH035_08; August 2021) der Fa. Trelleborg bekannt. Der genannte Leckagestrom bewirkt, dass trotzt hohem Druck nur ein geringer Verschleiß am ersten Dichtring auftritt. Wegen dem zweiten Fluidkanal kann sich im Leckageraum trotzdem kein Druck aufbauen, so dass der zweite Dichtring im Wesentlichen keiner Druckbeanspruchung standhalten muss. Der zweite Fluidkanal verläuft vorzugsweise vollständig innerhalb des zweiten Ringabschnitts. Er mündet vorzugsweise zwischen einem ersten und einem zweiten Drehlager in den Innenraum ein. Es versteht sich, dass der Betrag des genannten Leckagestroms vom Druck im Bremsraum abhängig ist. Der erste Dichtring ist vorzugsweise so ausgelegt, dass bei üblichen Bremsdrücken ein Leckagestrom vorhanden ist.

Es kann vorgesehen sein, dass in Richtung der Drehachse zwischen dem Verschlussring und dem Gehäuse ein dritter Dichtring angeordnet ist. Vorzugsweise umfasst der dritte Dichtring eine ringförmige Gummidichtlippe, die von einem Blechring vor von außen in die Radialkolbenmaschine eindringende Partikel geschützt ist. Der dritte Dichtring dient in erster Line dem Schutz des zweiten Dichtrings vor von außen eindringenden Partikeln, so dass der zweite Dichtring eine möglichst lange Lebensdauer hat. Mit der bevorzugten Ausgestaltung des dritten Dichtrings, kann dieser einerseits wie vorgeschlagen angeordnet werden, wobei andererseits seine Funktion dauerhaft gegeben ist.

Es kann vorgesehen sein, dass zwischen dem Wellenabschnitt und dem zweiten Ringabschnitt ein vierter Dichtring angeordnet ist, welcher den Bremsraum derart fluiddicht verschließt, dass sich im Dichteingriff ein Leckagestrom ergeben kann, wenn der Bremsraum unter Druck steht. Der vierte Dichtring verwendet vorzugsweise das gleiche Dichtprinzip wie der erste Dichtring, wobei er vorzugsweise als Kompressions-Dichtring, insbesondere als "Buffer ring" ausgebildet ist. Da der vierte Dichtring unmittelbar an den Innenraum des Gehäuses angrenzt, sind keine weiteren Maßnahmen, zur Ableitung des genannten Leckagestroms erforderlich. Der Druck im Bremsraum wirkt vorzugsweise unmittelbar auf den vierten Dichtring.

Es kann vorgesehen sein, dass eine vom Scheibenabschnitt abgewandte Stirnseite des ersten Ringabschnitts in der Art einer Labyrinth-Dichtung mit dem Gehäuse zusammenwirkt. Mit der Labyrinth-Dichtung soll erreicht werden, dass möglichst wenige Partikel von außen bis zum dritten Dichtring gelangen können, so dass sich ein bestmöglicher Schutz des zweiten Dichtrings ergibt.

Es kann vorgesehen sein, dass außen am Gehäuse ein erster Befestigungsflansch angeordnet ist, mittels welchem die Radialkolbenmaschine an einer übergeordneten Baugruppe befestigbar ist, wobei ein Bremsanschluss am ersten Befestigungsflansches angeordnet ist, wobei der Bremsanschluss fluidisch mit dem Bremsraum verbunden ist. Bei der übergeordneten Baugruppe handelt es sich beispielsweise um das Fahrgestell eines hydraulisch angetriebenen Fahrzeugs, wobei die Radialkolbenmaschine als Radialkolbenmotor betrieben wird, der ein zugeordnetes Rad oder eine zugeordnete Fahrkette des Fahrzeugs unmittelbar antreibt. Der erste Ringabschnitt der Antriebswelle kann mit einem zweiten Befestigungsflansch versehen sein, an dem beispielsweise das genannte Rad befestigt ist. Der Bremsanschluss ist vorzugsweise an einer Außenumfangsfläche des ersten Befestigungsflansches angeordnet. Der Bremsanschluss ist vorzugsweise permanent mit dem Bremsraum fluidisch verbunden, höchst vorzugsweise über einen dritten Fluidkanal, der ausschließlich im Gehäuse, insbesondere im dritten Gehäuseteil verläuft.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht einer erfindungsgemäßen Radialkolbenmaschine;
- Fig. 2: einen Längsschnitt der Radialkolbenmaschine nach Fig. 1; und
- Fig. 3: einen vergrößerten Ausschnitt von Fig. 2 im Bereich der Mehrscheibenbremse.

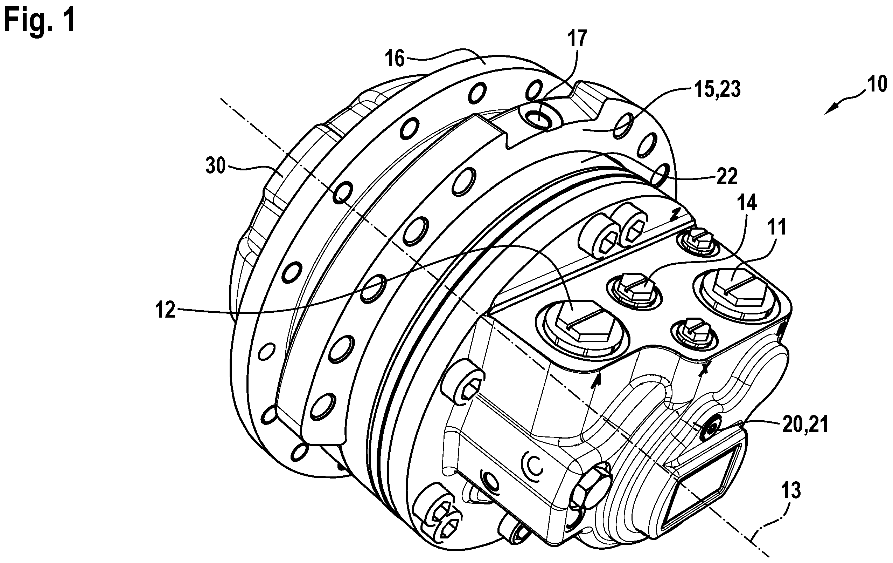

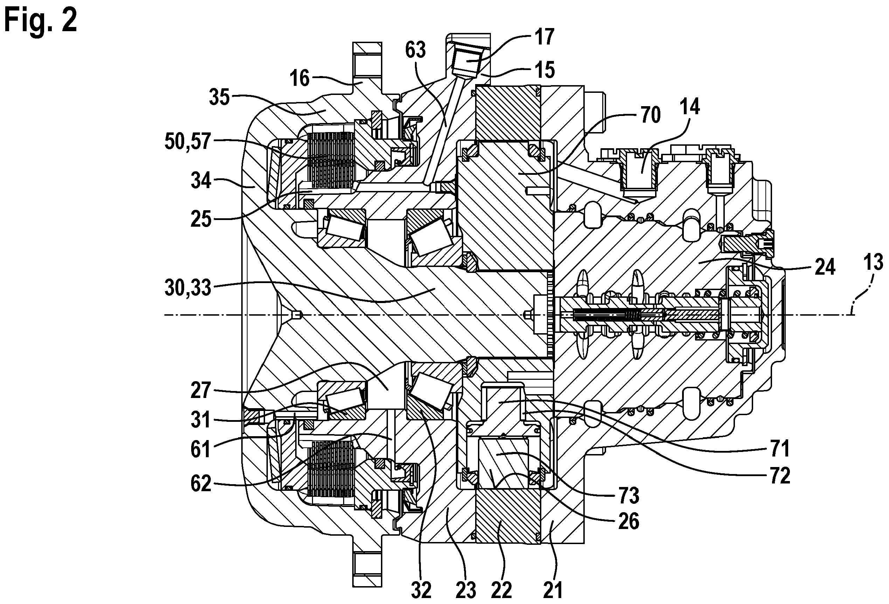

Fig. 1 zeigt eine perspektivische Ansicht einer erfindungsgemäßen Radialkolbenmaschine 10. Die Radialkolbenmaschine 10 umfasst ein Gehäuse 20, welches vorliegend aus einem ersten, einem zweiten und einem dritte Gehäuseteil 21; 22; 23 zusammengesetzt ist, die entlang der Drehachse 13 nebeneinander angeordnet und fest miteinander verbunden sind. Außen am ersten Gehäuseteil 21 sind der erste und der zweite Arbeitsanschluss 11; 12 angeordnet, wobei innerhalb des ersten Gehäuseteils 21 der Fluidverteiler (Nr. 24 in Fig. 1) angeordnet ist. Die Innenumfangsfläche des zweiten Gehäuseteils 21 bildet die Steuerfläche (Nr. 26 in Fig. 2), welche die Kolben (Nr. 71 in Fig. 2) bewegt. Am dritten Gehäuseteil sind die beiden Drehlager (Nr. 31; 32 in Fig. 2) befestigt, mit welchen die Antriebswelle 30 bezüglich der Drehachse 13 drehbar gelagert ist. Am Gehäuse 20, insbesondere am dritten Gehäuseteil 23, ist ein erster Befestigungsflansch 15 angeordnet, mit welchem die Radialkolbenmaschine 10 an einer übergeordneten Baugruppe, beispielsweise dem Fahrgestell eines hydraulisch angetrieben Fahrzeugs, befestigbar ist. An der Antriebswelle 30 ist eine zweiter Befestigungsflansch 16 angeordnet, mit welchem der Radialkolbenmotor 10 an einer untergeordneten Baugruppe, beispielsweise dem Rad des genannten Fahrzeugs, befestigbar ist.

Im Rahmen der vorliegenden Erfindung hat es sich als vorteilhaft erweisen, den Bremsanschluss 17, mit dem die vorliegende Mehrscheibenbremse hydraulisch gelöst wird, am ersten Befestigungsflansch 15 anzuordnen, insbesondere an dessen Außenumfangsfläche.

Fig. 2 zeigt einen Längsschnitt der Radialkolbenmaschine 10 nach Fig. 1. Zu erkennen ist der Rotor 70, der sich zusammen mit der Antriebswelle 30 bezüglich der Drehachse 13 dreht. Der Wellenabschnitt 33 der Antriebswelle 30 ist vorliegend über eine Keilwellenverzahnung drehfest bezüglich der Drehachse 13 mit dem Rotor 70 verbunden.

Die Antriebswelle 30 ist mit einem ersten und eine zweiten Drehlager 31; 32 bezüglich der Drehachse 13 drehbar am Gehäuse 20 gelagert, die beide auf der gleichen Seite des Rotor 70 angeordnet sind. Die Drehlager 31; 32 sind vorliegend als Kegelrollenlager ausgebildet, wobei deren Innenring jeweils auf dem Wellenabschnitt 33 der Antriebswelle 30 aufgenommen ist, wobei der Außenring jeweils innen am zweiten Ringabschnitt 25 des dritten Gehäuseteils 23 aufgenommen ist.

Auf der von den Drehlagern 31; 32 abgewandten Seite des Rotors 70 ist der Fluidverteiler 24 drehfest im Gehäuse 20, insbesondere im ersten Gehäuseteil 21, aufgenommen. Der Fluidverteiler 24 ist vorzugsweise so ausgelegt, dass die in dessen Inneren wirkenden hydraulischen Kräfte den Fluidverteiler 24 gegen den Rotor 70 drücken, wobei der Rotor 70 wiederum am zweiten Drehlager 32 anliegt, um die entsprechende Kraft abzustützen.

Im Rotor 70 sind vorliegend neun untereinander identische Kolben 71 aufgenommen, welche jeweils radial bezüglich der Drehachse 13 linearbeweglich sind, wobei sie zusammen mit dem Rotor 70 jeweils ein Arbeitsraum 72 mit veränderlichem Volumen begrenzen. Jeder Kolben 70 umfasst vorzugsweise eine drehbar Rolle 73, die im Wesentlichen kreiszylindrisch ausgebildet ist, wobei sie höchst vorzugsweise hydrostatisch am Kolben 71 gelagert ist. Im Betrieb liegt die Rolle 73 an der Steuerfläche 26 am zweiten Gehäuseteil 22 an. Die Steuerfläche 26 verläuft mit variablem Abstand um die Drehachse herum. Der Verlauf der Steuerfläche 26 ist dabei sinusartig mit vorliegend sechs Abstandmaxima und sechs Abstandsminima. Ein Kolben 71 führt vorliegend also sechs Hübe während einer vollen Umdrehung des Rotors 70 aus. Es versteht sich, dass die Anzahl der Kolben 71 und die Anzahl der Hübe pro Rotor-Umdrehung je nach Bedarf wählbar ist.

Jeder Arbeitsraum 72 hat am Rotor 70 eine erste Steueröffnung, die zum Fluidverteiler 24 hin ausmündet, wobei die ersten Steueröffnungen auf einem gemeinsamen Teilkreis angeordnet sind. Der Fluidverteiler 24 hat vorliegend insgesamt zwölf zweite Steueröffnungen, die auf dem gleichen Teilkreis angeordnet sind, so dass sie in Überdeckung im den ersten Steueröffnungen bringbar sind. Es sind als zwei zweite Steueröffnungen für jeden Hub, den ein Kolben 71 bei einer vollen Umdrehung des Rotors 70 ausführt, vorhanden. Die zweiten Steueröffnung sind entlang des Umfangs im Wechsel mit dem ersten und den zweiten Arbeitsanschluss 11; 12 verbunden, wenn die Radialkolbenmaschine 10 mit ihrem maximalen Verdrängungsvolumen betrieben wird. Ein Teil oder alle zweiten Steueröffnungen können mittels einer Ventileinheit kurzgeschlossen sein, um dass effektive Verdrängungsvolumen der Radialkolbenmaschine 10 gegenüber dem maximalen Verdrängungsvolumen zu vermindern oder ganz auf Null abzusenken, wobei sich der Rotor 70 im letztgenannten Fall frei dreht.

An dem vom Fluidverteiler 24 abgewandten Ende ist der massive Wellenabschnitt 33 der Antriebswelle 30 über einen Scheibenabschnitt 34 einstückig mit einem ersten Ringabschnitt 35 der Antriebswelle 30 verbunden. Der der erste Ringabschnitt 35 umgibt den Wellenabschnitt 33 kreisringartig, wobei innerhalb des ersten Ringabschnitts 35 das Bremsscheibenpaket 50 der Mehrscheibenbremse 57 angeordnet ist. Der zweite Ringabschnitt 25, der fest mit dem Gehäuse 20 verbunden ist, ragt abschnittsweise in den ersten Ringabschnitt 35 hinein, so dass das genannte Bremsscheibenpaket 50 außen um den zweiten Ringabschnitt 25 herum angeordnet ist.

Das Bremsscheibenpaket 50 umfasst mehrere erste und mehrere zweite Bremsscheiben 51; 52, die im Wechsel entlang der Drehachse 13 nebeneinander angeordnet sind. Die ersten Bremsscheiben 51 sind drehfest mit dem ersten Ringabschnitt 35 verbunden. Der erste Ringabschnitt 35 hat hierfür an seiner Innenumfangsfläche mehrere parallel zur Drehachse 13 verlaufende Nuten, in die jeweils ein Fortsatz einer ersten Bremsscheibe 51 formschlüssig eingreift. Der zweite Ringabschnitt 25 hat an seiner Außenumfangsfläche vergleichbare Nuten, die parallel zur Drehachse 13 verlaufen, wobei dort jeweils Fortsätze der zweiten Bremsscheiben 52 formschlüssig eingreift. Die genannten Nuten sind vorzugsweise jeweils gleichförmig verteilt um die Drehachse 13 herum angeordnet.

Eine Besonderheit der vorliegenden Erfindung besteht darin, dass das Bremsscheibenpaket 50 innerhalb des Bremsraums 58 angeordnet ist. In der Folge begrenzen der erste und der zweite Ringabschnitt 35; 25 den Bremsraum 58 jeweils abschnittsweise. Zwischen dem Bremsscheibenpaket 50 und dem Scheibenabschnitt 34 ist der in Richtung der Drehachse 13 bewegliche Bremskolben 54 angeordnet, der ringartig um die Drehachse 13 herum verläuft. Dieser begrenzt den Bremsraum 58 ebenfalls. Die Feder 53, mit welcher die Mehrscheibenbremse in den geschlossenen Zustand vorgespannt ist, ist wiederum zwischen dem Bremskolben 54 und dem Scheibenabschnitt 34 angeordnet. Die Feder 53 ist vorzugsweise als einzelne Tellerfeder ausgebildet. Es ist denkbar, dass die Feder mehrere Schraubenfedern umfasst, die geleichförmig verteil um die Drehachse 13 herum angeordnet sind.

Hinzuweisen ist noch auf den Innenraum 27 des Gehäuses 20. Dieser Innenraum 27 ist definiert als der Raum innerhalb des Gehäuses 20 der permanent und mit geringem Strömungswiderstand mit dem Leckageanschluss 14 fluidisch verbunden ist. Dieser Innenraum 27 ist während dem Betrieb der Radialkolbenmaschine 10 teilweise oder ganz mit Druckfluid gefüllt, wobei diese Füllung in erster Linie von unvermeidbaren Leckagen an verschiedenen Stellen der Radialkolbenmaschine 10 verursacht wird.

Diese Leckagen werden über den Leckageanschluss 14 vorzugsweise zu einen im Wesentlichen drucklosen Tank abgeführt.

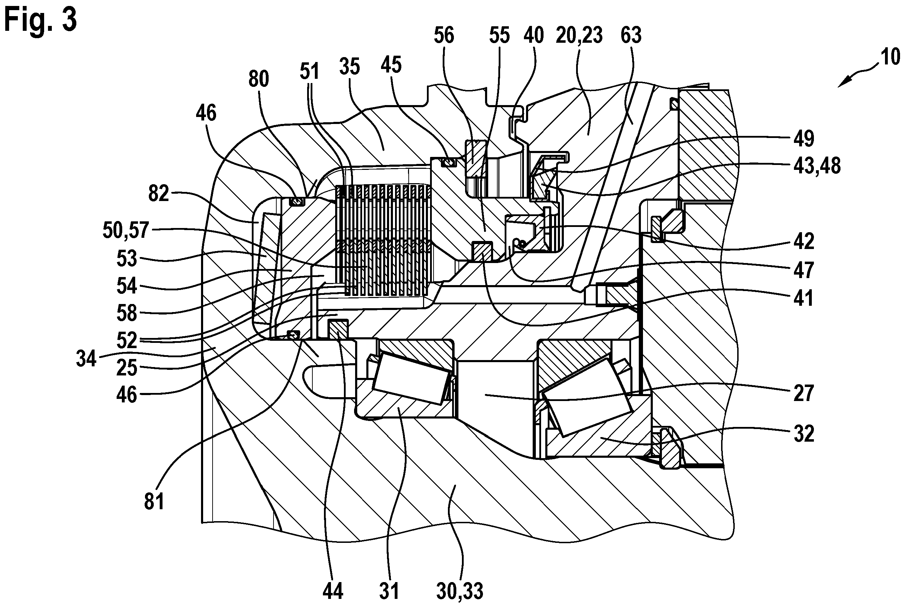

Fig. 3 zeigt einen vergrößerten Ausschnitt von Fig. 2 im Bereich der Mehrscheibenbremse 57. Die oben erläuterte Gestaltung des Bremsraums 58 hat zur Folge, dass dieser von Oberflächen begrenzt wird, die sich im Betrieb der Radialkolbenmaschine 10 relativ zueinander bezüglich der Drehachse (Nr. 13 in Fig. 2) drehen. Genau diesen Umstand hat man mit der Konstruktion der EP 2 841 763 B1 vermieden. In der Folge ist die Auslegung des ersten und des vierten Dichtrings 41; 42 für die Funktion der Mehrscheibenbremse 57 kritisch, da diese einerseits dem Druck im Bremsraum 58 standhalten müssen, wobei sie andererseits dem durch die genannte Drehbewegung verursachten Verschleiß lange widerstehen müssen.

Der erste und der vierte Dichtring 41; 42 sind daher so ausgelegt, dass sie den Bremsraum 58 unmittelbar abdichtet, wobei sich im Dichteingriff ein Leckagestrom ergibt bzw. ergeben kann, wenn der Bremsraum unter Druck steht. Hierbei ist anzumerken, dass der Bremsdruck für die vorliegende Radialkolbenmaschine 10 üblicherweise von einer Hydraulikpumpe bereitgestellt wird, welche die Leckagen ohne Weiteres ersetzen kann. Es versteht sich, dass der genannte Leckagestrom so klein ausgelegt ist, dass der zum Lösen notwendige Bremsdruck im Bremsraum erzeugt werden kann. Gleichzeitig ist er aber vorzugsweise so groß ausgelegt, dass der genannte Leckagestrom einen hydrostatischen Schmierfilm im Dichtkontakt bewirkt, welcher den dort auftretenden Verschleiß erheblich minimiert.

In beiden Dichtfällen wird der Leckagestrom in den Innenraum 27 des Gehäuses 20 geleitet, so dass er über den Leckageanschluss (Nr. 14 in Fig. 2) von der Radialkolbenmaschine 20 weg geleitet werden kann. Den vierten Dichtring 44 hat man daher zwischen dem Wellenabschnitt 33 der Antriebswelle 30 und dem zweiten Ringabschnitt 25 angeordnet, da er dort unmittelbar an den Innenraum 27 angrenzt, so dass keine weiteren Maßnahmen zur Ableitung der Leckagestroms erforderlich sind. Der Leckagestrom verbessert überdies die Schmierung des dort angeordneten ersten Drehlagers 31. Der vierte Dichtring 44 ist vorliegend in einer Nut im Wellenabschnitt 33 aufgenommen, wobei er gegen eine bezüglich der Drehachse (Nr. 13 in Fig. 2) kreiszylindrische Innenumfangsfläche des zweiten Ringabschnitts 25 dichtet.

Die Abdichtung im Bereich des ersten Dichtrings 41 ist demgegenüber deutlich aufwändiger gestaltet, da dort die Gefahr besteht, dass der erwünschte Leckagestrom über den Spalt im Bereich der Labyrinth-Dichtung 40 zwischen der Antriebswelle 30 und dem Gehäuse 20 in die Umgebung der Radialkolbenmaschine gelangt. Dort ist eine vollständig dichte Abdichtung erwünscht. Weiter ist zu berücksichtigen, dass eine Montage der Mehrscheibenbremse möglich sein muss.

Man hat sich zunächst entschieden, die Antriebswelle 30 mit dem Wellenabschnitt 33, den Scheibenabschnitt 34 und dem ersten Ringabschnitt 35 einstückig auszuführen, damit die am zweiten Flansch (Nr. 16 in Fig. 1) angreifenden Kräfte möglichst ohne elastische Verformung der Radialkolbenmaschine 10 auf den ersten Flansch (Nr. 15 in Fig. 1) übertragen werden können und umgekehrt. Der ringartige Bremskolben 54 liegt innen 81 und außen 80 ausschließlich an der einstückigen Antriebswelle 30 an, so dass das aus der EP 2 841 763 B1 bekannte Dichtungsprinzip am Bremskolben 54 unverändert übernommen werden kann. In den entsprechenden ringförmig umlaufenden Nuten sind beispielsweise sechste Dichtringe 46 in Form von O-Ringen aufgenommen, welche vorzugsweise im Bereich des Dichtkontakts von eine härteren Gleitringen vor Verschleiß geschützt werden.

Damit die Feder 53, der Bremskolben 54 und das Bremsscheibenpaket 50 in Fig. 3 von rechts her montiert werden können, ist eine gesonderter Verschlussring 55 vorgesehen, der mittels eines Sicherungsrings 56 innen am ersten Ringabschnitt 35 befestigt ist. Der Sicherungsring 56 überträgt zunächst die in Richtung der Drehachse (Nr. 13 in Fig. 2) wirkenden Kräfte, die durch die Feder 53 und/oder durch den Druck im Bremsraum 58 verursacht werden. Er bewirkt außerdem, dass sich der Verschlussring 55 im Betrieb des Radialkolbenmotors 10 mit der Antriebswelle 30 mitdreht. In einer Nut außen am Verschlussring 55 ist ein fünfter Dichtring 45 aufgenommen, der beispielsweise als einfacher O-Ring ausgeführt ist, weil dort nur eine unproblematische statische Abdichtung erforderlich ist.

Der bereits angesprochene erste Dichtring 41 ist in einer Nut an der Innenumfangsfläche des Verschlussrings 55 aufgenommen, wobei er gegen eine bezüglich der Drehachse (Nr. 13 in Fig. 2) kreiszylindrische Fläche am zweiten Ringabschnitt 35 dichtet. Der dortige Leckagestrom wird über den zweiten Fluidkanal (Nr. 62 in Fig. 2) in den Innenraum 27 des Gehäuses 20 geleitet. Der zweite Fluidkanal (Nr. 62 in Fig. 2) ist als gerade Bohrung ausgeführt, welche den zweiten Ringabschnitt 25 radial zur Drehachse (Nr. 13 in Fig. 2) durchsetzt, wobei er außen in einen Leckageraum 47 einmündet, der vom ersten und vom zweiten Dichtring 41; 42 begrenzt wird. Im Leckageraum 47 herrscht daher der niedrige Druck des Innenraums 27. Der zweite Dichtring 42 wird daher nur mit einem geringen Druck belastet, wobei er beispielsweise als Radialwellendichtring ausgebildet ist, der gegen eine bezüglich der Drehachse (Nr. 13 in Fig. 2) kreiszylindrische Fläche am zweiten Ringabschnitt 25 dichtet. Ein derartiger Dichtring ist vollständig dicht, wobei er der Drehbewegung im Dichteingriff dauerhaft standhält. Er ist jedoch sehr empfindlich hinsichtlich gegen von außen eindringender Partikel.

Die vorliegende Radialkolbenmaschine wird beispielsweise in Baumaschinen verwendet, so dass damit zu Rechnen ist, dass Sand und/oder Schlamm von außen auf die Radialkolbenmaschine 10 einwirken. Um ein Eindringen der entsprechenden Partikel von außen zu erschweren hat man zunächst die Labyrinth-Dichtung 40 zwischen der freien Stirnseite des ersten Ringabschnitts 35 und dem Gehäuse 20 vorgesehen. Der entsprechende Dichtspalt ist vorzugsweise so ausgelegt, dass Partikel deutlicher einfacher von innerhalb der Radialkolbenmaschine 10 nach außerhalb der Radialkolbenmaschine 10 gelangen können als umgekehrt. Zusätzlich ist der dritte Dichtring 43 vorgesehen, der an einer Stirnseite des Verschlussrings 55 aufgenommen ist, wobei seine Gummidichtlippe 48 gegen eine zur Drehachse (Nr. 13 in Fig. 2) senkrechte Dichtfläche am Gehäuse 20 dichtet. Diese Gummidichtlippe 48 wird von einem Blechring 49 vor den genannten Partikeln geschützt. Dieser Blechring 49 trägt vorzugsweise die Gummidichtlippe 48, wobei sein freies Ende in eine Nut im Gehäuse 20 eingreift, so dass sich ein weiteres Dichtungs-Labyrinth ergibt.

Die Feder 53 ist vorliegend als Tellerfeder ausgebildet, welche in dem Federraum 82 zwischen der Antriebswelle 30 und dem Bremskolben 54 aufgenommen ist. Ohne den ersten Fluidkanal (Nr. 61 in Fig. 2), der vom Federraum 82 zum Innenraum 27 des Gehäuses führt, wäre der Federraum 82 nahezu dicht verschlossen. Unvermeidbare Leckagen zum Federraum 82 hin könnten dazu führen, dass die erwünschte Bewegung des Bremskolbens 54 behindert wird. Dies wird durch den ersten Fluidkanal (Nr. 61 in Fig. 2) zuverlässig verhindert.

Hinzuweisen ist noch auf den dritten Fluidkanal 63 (siehe auch Fig. 2), welcher den Bremsraum 58 permanent mit dem Bremsanschluss (Nr. 17 in Fig. 2) verbindet. Der dritte Fluidkanal 63 ist vorliegend aus zwei geraden Bohrungen zusammengesetzt, welche vollständig im dritten Gehäuseteil 23 verlaufen.

### Bezugszeichen

- 10: Radialkolbenmaschine
- 11: erster Arbeitsanschluss
- 12: zweiter Arbeitsanschluss
- 13: Drehachse
- 14: Leckageanschluss
- 15: erster Befestigungsflansch
- 16: zweiter Befestigungsflansch
- 17: Bremsanschluss

- 20: Gehäuse
- 21: erstes Gehäuseteil
- 22: zweites Gehäuseteil
- 23: drittes Gehäuseteil
- 24: Fluidverteiler
- 25: zweiter Ringabschnitt
- 26: Steuerfläche
- 27: Innenraum des Gehäuses

- 30: Antriebswelle
- 31: erstes Drehlager
- 32: zweites Drehlager
- 33: Wellenabschnitt
- 34: Scheibenabschnitt
- 35: erster Ringabschnitt

- 40: Labyrinth-Dichtung
- 41: erster Dichtring
- 42: zweiter Dichtring
- 43: dritter Dichtring
- 44: vierter Dichtring
- 45: fünfter Dichtring
- 46: sechster Dichtring
- 47: Leckageraum
- 48: Gummidichtlippe des dritten Dichtrings
- 49: Blechring des dritten Dichtrings

- 50: Bremsscheibenpaket
- 51: erste Bremsscheibe
- 52: zweite Bremsscheibe
- 53: Feder
- 54: Bremskolben
- 55: Verschlussring
- 56: Sicherungsring
- 57: Mehrscheibenbremse
- 58: Bremsraum

- 61: erster Fluidkanal
- 62: zweiter Fluidkanal
- 63: dritter Fluidkanal

- 70: Rotor
- 71: Kolben
- 72: Arbeitsraum
- 73: Rolle

- 80: radial äußere Umfangsfläche des Bremskolbens
- 81: radial innere Umfangsfläche des Bremskolbens
- 82: Federraum

## Patentansprüche

1. Radialkolbenmaschine (10) mit einem Gehäuse (20), welches einen ersten und einen zweiten Arbeitsanschluss (11; 12) hat, wobei eine Antriebswelle (30) mit wenigstens einem Drehlager (31; 32) bezüglich einer Drehachse (13) drehbar in dem Gehäuse (20) gelagert ist, wobei die Antriebswelle (30) mit einem Rotor (70) bezüglich der Drehachse (13) drehfest verbunden ist, wobei in dem Rotor (70) mehrere Kolben (71) aufgenommen sind, die bezüglich der Drehachse (13) radial beweglich sind, so dass sie zusammen mit dem Rotor (70) jeweils einen zugeordneten Arbeitsraum (72) begrenzen, wobei innen am Gehäuse (20) eine Steuerfläche (26) angeordnet ist, welche die Drehachse (13) ringartig umgibt, wobei ein Abstand zwischen der Steuerfläche (26) und der Drehachse (13) entlang des Umfangs der Steuerfläche (26) variabel ist, so dass sich das Volumen eines Arbeitsraums (72) periodisch ändert, wenn der betreffende Kolben (71) die Steuerfläche (26) berührt, während sich der Rotor (70) bezüglich der Drehachse (13) dreht, wobei das Gehäuse (20) einen Fluidverteiler (24) umfasst, der so mit dem Rotor (70) zusammenwirkt, dass die Arbeitsräume (72) bei einer Drehung des Rotors (70) bezüglich der Drehachse (13) im Wechsel mit dem ersten und dem zweiten Arbeitsanschluss (11; 12) fluidisch verbindbar sind, wobei die Antriebswelle (30) einen Wellenabschnitt (33), einen Scheibenabschnitt (34) und einen ersten Ringabschnitt (35) umfasst, die fest miteinander verbunden sind, wobei das Gehäuse (20) einen zweiten Ringabschnitt (25) umfasst, der zumindest teilweise innerhalb des ersten Ringabschnitts (35) angeordnet ist, wobei radial zur Drehachse (13) zwischen dem ersten und dem zweiten Ringabschnitt (35; 25) ein Bremsscheibenpaket (50) mit mehreren gesonderten Bremsscheiben (51; 52) angeordnet ist, wobei die Bremsscheiben (51; 52) abwechselnd entweder mit dem ersten oder dem zweiten Ringabschnitt (35; 25) drehfest verbunden sind, so dass sich eine Mehrscheibenbremse (57) ergibt, wobei das Bremsscheibenpaket (50) mittels einer Feder (53) in einen geschlossenen Zustand der Mehrscheibenbremse (57) vorgespannt ist, wobei ein ringartiger Bremskolben (54) vorgesehen ist, der einem Bremsraum (58) abschnittsweise begrenzt, wobei der Bremskolben (54) so mit dem Bremsscheibenpaket (50) und der Feder (53) zusammenwirkt, dass die Mehrscheibenbremse (57) durch Druckbeaufschlagung des Bremsraums (58) in einen offenen Zustand gebracht werden kann,
**dadurch gekennzeichnet, dass** das Bremsscheibenpaket (50) innerhalb des Bremsraumes (58) angeordnet ist, wobei der erste und der zweite Ringabschnitt (35; 25) den Bremsraum (58) jeweils abschnittsweise begrenzen, wobei der Scheibenabschnitt (34), die Feder (53), der Bremskolben (54) und das Bremsscheibenpaket (50) in der angegebenen Reihenfolge entlang der Drehachse (13) so nebeneinander angeordnet sind, dass eine Kraft der Feder (53) auf das Bremsscheibenpaket (50) übertragbar ist.

2. Radialkolbenmaschine (10) nach Anspruch 1,
wobei der Bremskolben (54) mit einer radial äußeren Umfangsfläche (80) dichtend am ersten Ringabschnitt (35) anliegt, wobei er mit einer radial inneren Umfangsfläche (81) dichtend am Wellenabschnitt (33) anliegt, so dass die Antriebswelle (30) und der Bremskolben (54) einen Federraum (82) umgrenzen, in welchem die Feder (53) angeordnet ist.

3. Radialkolbenmaschine (10) nach Anspruch 2,
wobei ein erster Fluidkanal (61) vorgesehen ist, welcher ausgehend vom Federraum (82) bis zu einem Innenraum (27) des Gehäuses (20) vollständig innerhalb der Antriebswelle (30) verläuft.

4. Radialkolbenmaschine (10) nach einem der vorstehenden Ansprüche,
wobei ein gesonderter Verschlussring (55) vorgesehen ist, der radial zur Drehachse (13) zwischen dem ersten und dem zweiten Ringabschnitt (35; 25) angeordnet ist, wobei der Verschlussring (55) den Bremsraum (58) abschnittsweise begrenzt, wobei das Bremsscheibenpaket (50) in Richtung der Drehachse (13) zwischen dem Bremskoben (54) und dem Verschlussring (55) angeordnet ist, so dass eine Kraft der Feder (53) am Verschlussring abstützbar ist, wobei der Verschlussring (55) in Richtung der Drehachse (13) am ersten Ringabschnitt (35) abgestützt ist.

5. Radialkolbenmaschine (10) nach Anspruch 4,
wobei der Verschlussring (55) mittels eines gesonderten Sicherungsrings (56) am ersten Ringabschnitt (35) in Richtung der Drehachse (13) abgestützt ist, wobei die entsprechende Verbindung so ausgelegt ist, dass der Verschlussring (55) außerdem bezüglich der Drehachse (13) drehfest mit dem ersten Ringabschnitt (35) verbunden ist.

6. Radialkolbenmaschine (10) nach Anspruch 4 oder 5,
wobei der Verschlussring (55) radial außen drehfest mit dem ersten Ringabschnitt (35) verbunden ist, wobei radial innen am Verschlussring (55) wenigstens ein dynamischer Dichtring zwischen dem Verschlussring (55) und dem zweiten Ringabschnitt (25) angeordnet ist.

7. Radialkolbenmaschine (10) nach Anspruch 6,
wobei der wenigstens eine dynamische Dichtring einen ersten und einen zweiten Dichtring (41; 42) umfasst, die in Richtung der Drehachse (13) nebeneinander angeordnet sind, so dass sich zwischen dem ersten und dem zweiten Dichtring (41; 42) ein Leckageraum (47) ergibt, wobei der erste Dichtring (41) den Bremsraum (58) unmittelbar abdichtet, wobei er so ausgelegt ist, dass sich im Dichteingriff ein Leckagestrom ergeben kann, wenn der Bremsraum (58) unter Druck steht, wobei der zweite Dichtring (42) fluiddicht ausgelegt ist, wobei der Leckageraum (47) über einen zweiten Fluidkanal (62) mit dem Innenraum (27) des Gehäuse (20) verbunden ist.

8. Radialkolbenmaschine (10) nach einem der Ansprüche 4 bis 7,
wobei in Richtung der Drehachse (13) zwischen dem Verschlussring (55) und dem Gehäuse (20) ein dritter Dichtring (43) angeordnet ist.

9. Radialkolbenmaschine nach Anspruch 8,
wobei der dritte Dichtring (43) eine ringförmige Gummidichtlippe (48) umfasst, die von einem Blechring (49) vor von außen in die Radialkolbenmaschine (10) eindringende Partikel geschützt ist.

10. Radialkolbenmaschine (10) nach einem der vorstehenden Ansprüche,
wobei zwischen dem Wellenabschnitt (33) und dem zweiten Ringabschnitt (25) ein vierter Dichtring (44) angeordnet ist, welcher den Bremsraum (58) derart fluiddicht verschließt, dass sich im Dichteingriff ein Leckagestrom ergeben kann, wenn der Bremsraum (58) unter Druck steht.

11. Radialkolbenmaschine (10) nach einem der vorstehenden Ansprüche,
wobei eine vom Scheibenabschnitt (34) abgewandte Stirnseite des ersten Ringabschnitts (35) in der Art einer Labyrinth-Dichtung (40) mit dem Gehäuse (20) zusammenwirkt.

12. Radialkolbenmaschine (10) nach einem der vorstehenden Ansprüche,
wobei außen am Gehäuse (20) ein erster Befestigungsflansch (15) angeordnet ist, mittels welchem die Radialkolbenmaschine (10) an einer übergeordneten Baugruppe befestigbar ist, wobei ein Bremsanschluss (17) am ersten Befestigungsflansches (15) angeordnet ist, wobei der Bremsanschluss (17) fluidisch mit dem Bremsraum verbunden ist.

## Claims

1. A radial piston machine (10) with a housing (20), which has a first and a second working connection (11; 12), wherein a drive shaft (30) is rotatably mounted in the housing (20) with at least one rotary bearing (31; 32) with respect to a rotational axis (13), wherein the drive shaft (30) is connected in a rotationally fixed manner to a rotor (70) with respect to the rotational axis (13), wherein a plurality of pistons (71) are received in the rotor (70) and are radially movable with respect to the rotational axis (13), so that together with the rotor (70) they each delimit an associated working chamber (72), wherein a control surface (26) is arranged inside the housing (20), which surrounds the rotational axis (13) in an annular manner, wherein a distance between the control surface (26) and the rotational axis (13) is variable along the circumference of the control surface (26), so that the volume of a working chamber (72) changes periodically when the respective piston (71) contacts the control surface (26) while the rotor (70) rotates with respect to the rotational axis (13), wherein the housing (20) comprises a fluid distributor (24) which co-operates with the rotor (70) such that the working chambers (72) can be fluidically connected alternately with the first and the second working connection (11; 12) during a rotation of the rotor (70) with respect to the rotational axis (13), wherein the drive shaft (30) comprises a shaft section (33), a disc section (34) and a first ring section (35), which are fixedly connected to one another, wherein the housing (20) comprises a second ring section (25), which is arranged at least partially within the first ring section (35), wherein radially to the rotational axis (13) between the first and the second ring section (35; 25) a brake disc pack (50) with a plurality of separate brake discs (51; 52) is arranged, wherein the brake discs (51; 52) are alternately connected in a rotationally fixed manner either with the first or the second ring section (35; 25), so that a multi-disc brake (57) results, wherein the brake disc pack (50) is pre-tensioned by means of a spring (53) into a closed state of the multi-disc brake (57), wherein an annular brake piston (54) is provided, which partially delimits a brake chamber (58), wherein the brake piston (54) co-operates with the brake disc pack (50) and the spring (53) in such a way that the multi-disc brake (57) can be brought into an open state by pressurizing the brake chamber (58),
**characterized in that** the brake disc pack (50) is arranged within the brake chamber (58), wherein the first and the second ring section (35; 25) each partially delimit the brake chamber (58), wherein the disc section (34), the spring (53), the brake piston (54) and the brake disc pack (50) are arranged next to one another in the specified sequence along the rotational axis (13) such that a force of the spring (53) is transmissible to the brake disc pack (50).

2. The radial piston machine (10) according to Claim 1, wherein the brake piston (54) rests sealingly on the first ring section (35) with a radially outer circumferential surface (80), wherein it rests sealingly on the shaft section (33) with a radially inner circumferential surface (81), so that the drive shaft (30) and the brake piston (54) enclose a spring chamber (82) in which the spring (53) is arranged.

3. The radial piston machine (10) according to Claim 2, wherein a first fluid channel (61) is provided, which extends from the spring chamber (82) to an inner space (27) of the housing (20) completely within the drive shaft (30).

4. The radial piston machine (10) according to any one of the preceding claims, wherein a separate closure ring (55) is provided, which is arranged radially to the rotational axis (13) between the first and the second ring section (35; 25), wherein the closure ring (55) partially delimits the brake chamber (58), wherein the brake disc pack (50) is arranged in the direction of the rotational axis (13) between the brake piston (54) and the closure ring (55), so that a force of the spring (53) can be supported on the closure ring, wherein the closure ring (55) is supported in the direction of the rotational axis (13) on the first ring section (35).

5. The radial piston machine (10) according to Claim 4, wherein the closure ring (55) is supported by means of a separate retaining ring (56) on the first ring section (35) in the direction of the rotational axis (13), wherein the corresponding connection is designed such that the closure ring (55) is also connected in a rotationally fixed manner with the first ring section (35) with respect to the rotational axis (13).

6. The radial piston machine (10) according to Claim 4 or 5, wherein the closure ring (55) is connected in a rotationally fixed manner on the radial outside with the first ring section (35), wherein at least one dynamic seal ring is arranged radially on the inside of the closure ring (55) between the closure ring (55) and the second ring section (25).

7. The radial piston machine (10) according to Claim 6, wherein the at least one dynamic seal ring comprises a first and a second seal ring (41; 42), which are arranged next to one another in the direction of the rotational axis (13), so that a leakage space (47) results between the first and the second seal ring (41; 42), wherein the first seal ring (41) directly seals the brake chamber (58), wherein it is designed such that a leakage flow can result in the sealing engagement when the brake chamber (58) is under pressure, wherein the second seal ring (42) is designed to be fluid-tight, wherein the leakage space (47) is connected via a second fluid channel (62) with the inner space (27) of the housing (20).

8. The radial piston machine (10) according to any one of Claims 4 to 7, wherein a third seal ring (43) is arranged in the direction of the rotational axis (13) between the closure ring (55) and the housing (20).

9. The radial piston machine according to Claim 8, wherein the third seal ring (43) comprises an annular rubber sealing lip (48), which is protected by a sheet metal ring (49) from particles penetrating from the outside into the radial piston machine (10).

10. The radial piston machine (10) according to any one of the preceding claims, wherein a fourth seal ring (44) is arranged between the shaft section (33) and the second ring section (25), which seals the brake chamber (58) in such a fluid-tight manner that a leakage flow can result in the sealing engagement when the brake chamber (58) is under pressure.

11. The radial piston machine (10) according to any one of the preceding claims, wherein an end face of the first ring section (35) facing away from the disc section (34) co-operates with the housing (20) in the manner of a labyrinth seal (40).

12. The radial piston machine (10) according to any one of the preceding claims, wherein a first fastening flange (15) is arranged on the outside of the housing (20), by means of which the radial piston machine (10) can be fastened to a superordinate assembly, wherein a brake connection (17) is arranged on the first fastening flange (15), wherein the brake connection (17) is fluidically connected to the brake chamber.

## Revendications

1. Machine à pistons radiaux (10) avec un carter (20), qui présente un premier et un deuxième raccord de travail (11 ; 12), dans laquelle un arbre d'entraînement (30) est monté rotatif dans le carter (20) avec au moins un palier de rotation (31 ; 32) par rapport à un axe de rotation (13), dans laquelle l'arbre d'entraînement (30) est relié solidairement en rotation à un rotor (70) par rapport à l'axe de rotation (13), dans laquelle plusieurs pistons (71) sont logés dans le rotor (70), qui sont mobiles radialement par rapport à l'axe de rotation (13), de sorte qu'ils délimitent chacun, avec le rotor (70), une chambre de travail (72) associée, dans laquelle une surface de commande (26) est disposée à l'intérieur du carter (20), laquelle entoure l'axe de rotation (13) de manière annulaire, dans laquelle une distance entre la surface de commande (26) et l'axe de rotation (13) est variable le long de la circonférence de la surface de commande (26), de sorte que le volume d'une chambre de travail (72) change périodiquement lorsque le piston (71) concerné touche la surface de commande (26), pendant que le rotor (70) tourne par rapport à l'axe de rotation (13), dans laquelle le carter (20) comprend un distributeur de fluide (24) qui coopère avec le rotor (70) de telle sorte que les chambres de travail (72), lors d'une rotation du rotor (70) par rapport à l'axe de rotation (13), peuvent être reliées fluidiquement en alternance avec le premier et le deuxième raccord de travail (11 ; 12), dans laquelle l'arbre d'entraînement (30) comprend une section d'arbre (33), une section de disque (34) et une première section annulaire (35), qui sont reliées fixement entre elles, dans laquelle le carter (20) comprend une deuxième section annulaire (25), qui est disposée au moins partiellement à l'intérieur de la première section annulaire (35), dans laquelle, radialement à l'axe de rotation (13), entre la première et la deuxième section annulaire (35 ; 25), un paquet de disques de frein (50) avec plusieurs disques de frein (51 ; 52) séparés est disposé, dans laquelle les disques de frein (51 ; 52) sont reliés en alternance de manière solidaire en rotation soit à la première, soit à la deuxième section annulaire (35 ; 25), de sorte qu'il en résulte un frein multidisque (57), dans laquelle le paquet de disques de frein (50) est précontraint au moyen d'un ressort (53) dans un état fermé du frein multidisque (57), dans laquelle un piston de frein (54) de type annulaire est prévu, qui délimite partiellement une chambre de frein (58), dans laquelle le piston de frein (54) coopère avec le paquet de disques de frein (50) et le ressort (53) de telle sorte que le frein multidisque (57) peut être amené à un état ouvert par mise sous pression de la chambre de frein (58),
**caractérisée en ce que** le paquet de disques de frein (50) est disposé à l'intérieur de la chambre de frein (58), dans laquelle la première et la deuxième section annulaire (35 ; 25) délimitent chacune partiellement la chambre de frein (58), dans laquelle la section de disque (34), le ressort (53), le piston de frein (54) et le paquet de disques de frein (50) sont disposés les uns à côté des autres dans l'ordre indiqué le long de l'axe de rotation (13), de sorte qu'une force du ressort (53) est transmissible au paquet de disques de frein (50).

2. Machine à pistons radiaux (10) selon la revendication 1, dans laquelle le piston de frein (54) est en appui étanche sur la première section annulaire (35) par une surface circonférentielle radialement extérieure (80), tandis qu'il est en appui étanche sur la section d'arbre (33) par une surface circonférentielle radialement intérieure (81), de sorte que l'arbre d'entraînement (30) et le piston de frein (54) délimitent une chambre de ressort (82) dans laquelle le ressort (53) est disposé.

3. Machine à pistons radiaux (10) selon la revendication 2, dans laquelle un premier canal de fluide (61) est prévu, lequel s'étend de la chambre de ressort (82) jusqu'à un espace intérieur (27) du carter (20) entièrement à l'intérieur de l'arbre d'entraînement (30).

4. Machine à pistons radiaux (10) selon l'une des revendications précédentes, dans laquelle une bague de fermeture (55) séparée est prévue, qui est disposée radialement à l'axe de rotation (13) entre la première et la deuxième section annulaire (35 ; 25), dans laquelle la bague de fermeture (55) délimite partiellement la chambre de frein (58), dans laquelle le paquet de disques de frein (50) est disposé dans la direction de l'axe de rotation (13) entre le piston de frein (54) et la bague de fermeture (55), de sorte qu'une force du ressort (53) peut être supportée par la bague de fermeture, dans laquelle la bague de fermeture (55) est supportée dans la direction de l'axe de rotation (13) sur la première section annulaire (35).

5. Machine à pistons radiaux (10) selon la revendication 4, dans laquelle la bague de fermeture (55) est supportée au moyen d'une bague de retenue (56) séparée sur la première section annulaire (35) dans la direction de l'axe de rotation (13), dans laquelle la liaison correspondante est conçue de telle sorte que la bague de fermeture (55) est également reliée solidairement en rotation à la première section annulaire (35) par rapport à l'axe de rotation (13).

6. Machine à pistons radiaux (10) selon la revendication 4 ou 5, dans laquelle la bague de fermeture (55) est reliée radialement à l'extérieur de manière solidaire en rotation à la première section annulaire (35), dans laquelle au moins une bague d'étanchéité dynamique est disposée radialement à l'intérieur sur la bague de fermeture (55) entre la bague de fermeture (55) et la deuxième section annulaire (25).

7. Machine à pistons radiaux (10) selon la revendication 6, dans laquelle l'au moins une bague d'étanchéité dynamique comprend une première et une deuxième bague d'étanchéité (41 ; 42), qui sont disposées l'une à côté de l'autre dans la direction de l'axe de rotation (13), de sorte qu'un espace de fuite (47) se forme entre la première et la deuxième bague d'étanchéité (41 ; 42), dans laquelle la première bague d'étanchéité (41) assure l'étanchéité immédiate de la chambre de frein (58), étant conçue de telle sorte qu'un courant de fuite peut se produire dans l'engagement d'étanchéité lorsque la chambre de frein (58) est sous pression, dans laquelle la deuxième bague d'étanchéité (42) est conçue pour être étanche aux fluides, dans laquelle l'espace de fuite (47) est relié via un deuxième canal de fluide (62) à l'espace intérieur (27) du carter (20).

8. Machine à pistons radiaux (10) selon l'une des revendications 4 à 7, dans laquelle une troisième bague d'étanchéité (43) est disposée dans la direction de l'axe de rotation (13) entre la bague de fermeture (55) et le carter (20).

9. Machine à pistons radiaux (10) selon la revendication 8, dans laquelle la troisième bague d'étanchéité (43) comprend une lèvre d'étanchéité annulaire en caoutchouc (48), qui est protégée par une bague en tôle (49) contre les particules pénétrant de l'extérieur dans la machine à pistons radiaux (10).

10. Machine à pistons radiaux (10) selon l'une des revendications précédentes, dans laquelle une quatrième bague d'étanchéité (44) est disposée entre la section d'arbre (33) et la deuxième section annulaire (25), laquelle assure l'étanchéité de la chambre de frein (58) de manière si étanche aux fluides qu'un courant de fuite peut se produire dans l'engagement d'étanchéité lorsque la chambre de frein (58) est sous pression.

11. Machine à pistons radiaux (10) selon l'une des revendications précédentes, dans laquelle une face frontale de la première section annulaire (35) opposée à la section de disque (34) coopère avec le carter (20) à la manière d'un joint à labyrinthe (40).

12. Machine à pistons radiaux (10) selon l'une des revendications précédentes, dans laquelle une première bride de fixation (15) est disposée à l'extérieur du carter (20), au moyen de laquelle la machine à pistons radiaux (10) peut être fixée à un ensemble superordonné, dans laquelle un raccord de frein (17) est disposé sur la première bride de fixation (15), dans laquelle le raccord de frein (17) est relié fluidiquement à la chambre de frein.
